# EUROPEAN PATENT APPLICATION

(11) **EP 4 830 836 A1**
(43) Date of publication of application: **28.10.2026**
(21) Application number: 24907638.1
(22) Date of filing: 04.07.2024
(51) Int. Cl.: B01J 37/10, B01J 37/08, B01J 23/46, B01J 23/64, C25B 13/08, C25B 9/77, C25B 9/23, C25B 1/04, C25B 11/093

(54) **METHOD FOR PREPARING CATALYST FOR OXYGEN EVOLUTION REACTION IN WATER ELECTROLYSIS CELL, AND WATER ELECTROLYSIS CELL MEMBRANE-ELECTRODE ASSEMBLY AND WATER ELECTROLYSIS CELL, WHICH COMPRISE CATALYST PREPARED USING SAME**

(30) Priority: 22.12.2023 KR 20230190213; 16.05.2024 KR 20240063790
(71) Applicant: Kolon Industries, Inc., Seoul 07793 (KR)
(72) Inventor: KIM, Jung Ho, Seoul 07793 (KR); KIM, Jun Young, Seoul 07793 (KR); LEE, Ju Sung, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/009478
(87) International publication number: WO 2025/135348

(57) **Abstract**

The present disclosure relates to a method for preparing a catalyst for an oxygen evolution reaction in a water electrolysis cell, and a water electrolysis cell membrane-electrode assembly and a water electrolysis cell, which comprise the catalyst prepared using same, and the method for preparing a catalyst for an oxygen evolution reaction in a water electrolysis cell comprises preparing a plurality of noble metal oxide seeds, and preparing a noble metal oxide aggregate by using the plurality of noble metal oxide seeds, thereby increasing the surface area thereof by means of pores between noble metal oxide particles, and thus performance and durability can be improved.

## Description

### [Technical Field]

The present disclosure relates to a method for manufacturing a catalyst for an oxygen evolution reaction of a water electrolysis cell, and a membrane-electrode assembly for a water electrolysis cell and a water electrolysis cell including a catalyst manufactured therefrom, and more particularly, to a method for manufacturing a catalyst for an oxygen evolution reaction of a water electrolysis cell, and a membrane-electrode assembly for a water electrolysis cell and a water electrolysis cell including a catalyst manufactured therefrom, in which a plurality of noble metal oxide seeds are manufactured, and a noble metal oxide aggregate is manufactured using the plurality of noble metal oxide seeds, thereby increasing a surface area due to pores between the noble metal oxide particles to improve performance and durability.

The present disclosure relates to the results of a project (Project Number: 20022451) conducted with the support of the Materials and Components Technology Development Program of the Ministry of Trade, Industry and Energy and the Korea Evaluation Institute of Industrial Technology (KEIT).

### [Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

The present disclosure relates to a catalyst for water electrolysis, particularly a catalyst for an oxygen evolution electrode of polymer electrolyte membrane (PEM) water electrolysis, iridium black and iridium oxide powder have been used as catalysts for an oxygen evolution reaction used in a conventional PEM water electrolysis oxygen evolution electrode, but improvements in their low dispersibility, low electrical conductivity, and instability are required.

### [Disclosure]

### [Technical Problem]

According to an embodiment, a method for manufacturing a catalyst for an oxygen evolution reaction in a water electrolysis cell is provided, in which a plurality of noble metal oxide seeds are manufactured, and a noble metal oxide aggregate is manufactured using the plurality of noble metal oxide seeds, thereby increasing surface area by pores between noble metal oxide particles to improve performance and durability.

According to another embodiment, there are provided a membrane-electrode assembly for a water electrolysis cell and a water electrolysis cell including a catalyst for an oxygen evolution reaction of a water electrolysis cell, wherein the catalyst is manufactured according to the method for manufacturing a catalyst for an oxygen evolution reaction of a water electrolysis cell.

### [Technical Solution]

A method for manufacturing a catalyst for an oxygen evolution reaction of a water electrolysis cell according to an embodiment comprises hydrothermally reacting a precursor of a noble metal oxide to form a plurality of noble metal oxide seeds, introducing a solution comprising the plurality of noble metal oxide seeds into a mold to agglomerate the plurality of noble metal oxide seeds, and performing a heat treatment on the plurality of agglomerated noble metal oxide seeds to form a noble metal oxide aggregate.

The precursor of the noble metal oxide may include iridium (Ir) chloride, iridium acetate, iridium aminate, iridium sulfide, or a combination thereof.

The precursor of the noble metal oxide may further include a chloride, an acetate, an aminate, a sulfide, or a combination thereof of a noble metal including Ru, Pt, Sn, Se, Sb, Ta, Te, Nb, W, Zn, Au, or a combination thereof.

The hydrothermal reaction may be performed at a temperature within a range of 60 °C to 120 °C for 0.5 hours to 3 hours.

A diameter of the noble metal oxide seeds may be within a range of 2 nm to 50 nm.

The mold may be an anodic aluminum oxide (AAO) membrane, a cellulose membrane, a polycarbonate membrane, or a nylon membrane, each including a substrate and a plurality of pores penetrating the substrate in a thickness direction.

A diameter of the pores of the mold may be within a range of 10 nm to 200 nm.

The plurality of noble metal oxide seeds may be stacked in a plurality of layers in the pores of the mold, and the layers may each include a plurality of the noble metal oxide seeds.

After introduction into the mold, a vacuum adsorption process is further performed, and the vacuum adsorption process may be performed under a pressure within a range of 5 kPa to 20 kPa for 10 minutes to 100 minutes.

The heat treatment may be performed at a temperature within a range of 350 °C to 600 °C for 0.5 hours to 4 hours.

The noble metal oxide aggregate may have a nanowire shape.

According to another embodiment, a membrane-electrode assembly for a water electrolysis cell comprises a polymer electrolyte membrane; an oxygen evolution electrode positioned on one surface of the polymer electrolyte membrane and comprising a catalyst for an oxygen evolution reaction; and a hydrogen evolution electrode positioned on the other surface of the polymer electrolyte membrane; wherein the catalyst for an oxygen evolution reaction may include a noble metal oxide aggregate in which a plurality of noble metal oxide particles comprising a noble metal oxide are agglomerated in a nanowire shape.

The noble metal oxide aggregate may have a BET specific surface area greater than or equal to 50 m²/g.

The noble metal oxide particles may be stacked in a plurality of layers along a length direction of the noble metal oxide aggregate, and the layers may each include a plurality of the noble metal oxide particles.

A diameter of the noble metal oxide aggregate may be within a range of 10 nm to 200 nm, and a length of the noble metal oxide aggregate may be within a range of 150 nm to 800 nm.

The noble metal oxide may be IrOₓ (wherein x is an integer of 1 to 3), IrMOₓ (wherein M includes Ru, Pt, Sn, Se, Sb, Ta, Te, Nb, W, Zn, Au, or a combination thereof, and x is an integer of 1 to 3), or a combination thereof.

The oxygen evolution electrode may further include an ion conductor, and the oxygen evolution electrode may include the catalyst for an oxygen evolution reaction within a range of 70 wt% to 95 wt% based on a total weight of the oxygen evolution electrode.

The hydrogen evolution electrode may comprise a catalyst for hydrogen evolution comprising a carbon-based support and active particles supported on the carbon-based support and comprising a noble metal.

The polymer electrolyte membrane may include a porous support including a plurality of pores, and an ion conductor filling the pores of the porous support.

According to another embodiment, a water electrolysis cell comprises the membrane-electrode assembly.

### [Advantageous Effects]

According to an embodiment, a method for manufacturing a catalyst for an oxygen evolution reaction of a water electrolysis cell comprises manufacturing a plurality of noble metal oxide seeds and manufacturing a noble metal oxide aggregate using the plurality of noble metal oxide seeds, wherein the surface area is increased due to pores between the noble metal oxide particles, so that performance and durability may be improved.

### [Brief Description Of The Drawings]

FIG. 1 is a schematic view illustrating a manufacturing process of a catalyst for an oxygen evolution reaction of a water electrolysis cell according to an embodiment.
FIG. 2 is a schematic diagram illustrating a membrane-electrode assembly (MEA) for a water electrolysis cell according to an embodiment.
FIG. 3 is a scanning electron microscope (SEM) image of a catalyst for an oxygen evolution reaction of a water electrolysis cell manufactured in Example 1.
FIG. 4 is a transmission electron microscope (TEM) image of a catalyst for an oxygen evolution reaction of a water electrolysis cell manufactured in Example 2.
FIG. 5 is a graph showing the results of measuring BET specific surface areas of catalysts for an oxygen evolution reaction of a water electrolysis cell manufactured in Examples 1 to 2 and Comparative Example.
FIG. 6 is a graph showing the results of evaluating I-V characteristics of membrane-electrode assemblies including catalysts for an oxygen evolution reaction of a water electrolysis cell manufactured in Examples 1 to 2 and Comparative Example.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" refers to a mixture, a laminate, a composite, a copolymer, an alloy, a blend, a reaction product, or the like of components.

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the present specification, terms are used only for the purpose of distinguishing one component from another component. A singular expression includes a plural expression unless the context clearly indicates otherwise.

### 1. Method for manufacturing a catalyst for an oxygen evolution reaction of a water electrolysis cell

A method for manufacturing a catalyst for an oxygen evolution reaction of a water electrolysis cell according to an embodiment comprises hydrothermally reacting a precursor of a noble metal oxide to form a plurality of noble metal oxide seeds, introducing a solution including the plurality of noble metal oxide seeds into a mold to agglomerate the plurality of noble metal oxide seeds, and performing a heat treatment on the agglomerated plurality of noble metal oxide seeds to form a noble metal oxide aggregate.

In the method for manufacturing a catalyst for an oxygen evolution reaction of the water electrolysis cell, a plurality of noble metal oxide seeds are formed using a precursor of a noble metal oxide and the seeds are introduced into a mold to be agglomerated, whereby a surface area is increased due to pores between the noble metal oxide particles compared to a case where a conventional precursor of a noble metal oxide is directly introduced into a mold, so that performance and durability may be improved.

The precursor of the noble metal oxide refers to a material in a stage prior to the noble metal oxide, which is the final product.

The precursor of the noble metal oxide may include iridium (Ir) chloride, iridium acetate, iridium aminate, iridium sulfide, or a combination thereof.

The precursor of a noble metal oxide according to an embodiment may be iridium (Ir) chloride, for example, IrCl₄.

The precursor of a noble metal oxide may further include a chloride, an acetate, an aminate, a sulfide, or a combination thereof of a noble metal including Ru, Pt, Sn, Se, Sb, Ta, Te, Nb, W, Zn, Au, or a combination thereof.

The precursor of a noble metal oxide may include only the iridium (Ir) chloride, the iridium acetate, the iridium aminate, the iridium sulfide, or a combination thereof, or may further include a chloride, an acetate, an aminate, a sulfide, or a combination thereof of a noble metal including Ru, Pt, Sn, Se, Sb, Ta, Te, Nb, W, Zn, Au, or a combination thereof, together with the iridium (Ir) chloride, the iridium acetate, the iridium aminate, the iridium sulfide, or a combination thereof.

The precursor of a noble metal oxide according to another embodiment may be a mixture of iridium (Ir) chloride and a chloride of a noble metal including Ru, Pt, Sn, Se, Sb, Ta, Te, Nb, W, Zn, Au, or a combination thereof, for example, a mixture of IrCl₄ and SnCl₄.

When the precursor of a noble metal oxide is a mixture of iridium chloride and a chloride of a noble metal including Ru, Pt, Sn, Se, Sb, Ta, Te, Nb, W, Zn, Au, or a combination thereof, the final product may be an iridium alloy oxide.

A hydrothermal reaction may be performed by further including a mild reducing agent together with the precursor of the noble metal oxide.

The mild reducing agent may include formaldehyde, formic acid, oxalic acid, ascorbic acid, citric acid, urea, ethylenediamine, hexamethylenetetramine, or a combination thereof.

The mild reducing agent may be included within a predetermined range based on 100 parts by weight of the precursor of a noble metal oxide. 100 parts by weight of the precursor of a noble metal oxide refers to its weight when one type of the precursor of a noble metal oxide is included, and refers to a total weight of the mixed precursors of a noble metal oxide when two or more types of the precursors of a noble metal oxide are mixed.

For example, when an iridium chloride and a Sn chloride are included as the precursors of a noble metal oxide, it refers to parts by weight of the mild reducing agent assuming that a total weight of the iridium chloride and the tin chloride is 100 parts by weight.

For example, a lower limit of the mild reducing agent relative to 100 parts by weight of the precursor of a noble metal oxide may be about 100 parts by weight, 120 parts by weight, 140 parts by weight, 160 parts by weight, 180 parts by weight, 200 parts by weight, 220 parts by weight, 240 parts by weight, 260 parts by weight, 280 parts by weight, or 300 parts by weight, and an upper limit thereof may be about 500 parts by weight, 480 parts by weight, 460 parts by weight, 440 parts by weight, 420 parts by weight, 400 parts by weight, 380 parts by weight, 360 parts by weight, 340 parts by weight, 320 parts by weight, or 300 parts by weight.

The mild reducing agent may be, relative to 100 parts by weight of the precursor of a noble metal oxide, greater than or equal to or greater than any one of the described lower limits; less than or equal to or less than any one of the described upper limits; or may have a range of greater than or equal to or greater than any one of the described lower limits and less than or equal to or less than any one of the described upper limits.

The precursor of a noble metal oxide and/or the mild reducing agent may be mixed in an aqueous solution state including distilled water and hydrothermally reacted to form a plurality of noble metal oxide seeds.

The hydrothermal reaction, as is well known, is one of liquid-phase synthesis methods and refers to synthesizing a material using water or an aqueous solution under high temperature and high pressure.

The temperature and the time of the hydrothermal reaction may be appropriately adjusted according to a size of the seed. For example, the hydrothermal reaction may be performed at a temperature within a predetermined range for a time within a predetermined range.

For example, a lower limit of the temperature of the hydrothermal reaction may be about 60°C, 65°C, 70°C, 75°C, or 80°C, and an upper limit thereof may be about 120°C, 110°C, 100°C, 90°C, or 80°C.

In addition, a lower limit of the time of the hydrothermal reaction may be about 0.5 hours, 0.6 hours, 0.7 hours, 0.8 hours, 0.9 hours, or 1 hour, and an upper limit thereof may be about 3 hours, 2.5 hours, 2 hours, 1.5 hours, or 1 hour.

The temperature and the time of the hydrothermal reaction may each be greater than or equal to, or greater than, any one of the described lower limits; less than or equal to, or less than, any one of the described upper limits; or may be in a range that is greater than or equal to, or greater than, any one of the described lower limits and less than or equal to, or less than, any one of the described upper limits.

The noble metal oxide seed refers to a material in a stage prior to the noble metal oxide particle, which is the final product.

The precursor of the noble metal oxide may form a plurality of noble metal oxide seeds having a diameter within a predetermined range according to the hydrothermal reaction. As for a specific measuring method of the diameter of the noble metal oxide seed, the diameter was measured by photographing the noble metal oxide seeds using a scanning electron microscope (SEM) or a transmission electron microscope (TEM).

A lower limit of the diameter of the noble metal oxide seed may be about 2 nm, 3 nm, 4 nm, 5 nm, 6 nm, 7 nm, 8 nm, 9 nm, or 10 nm, and an upper limit thereof may be about 50 nm, 45 nm, 40 nm, 35 nm, 30 nm, 25 nm, 20 nm, 15 nm, or 10 nm.

The diameter of the noble metal oxide seed may be greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

Since the noble metal oxide seed has a diameter within a predetermined range, pores between the seeds may be more effectively secured, and a surface area may be increased due to the pores between the seeds, thereby improving performance and durability.

The solution including the plurality of oxide seeds manufactured as described above may be introduced into the mold.

Before introducing the solution into the mold, a mild reducing agent may be further added to the solution. As the mild reducing agent is further added, aggregation of the noble metal oxide seeds and bonding between the aggregated particles may be strengthened.

A specific type of the mild reducing agent is as described above.

The mild reducing agent may be further added in a content within a predetermined range relative to 100 parts by weight of the precursor of the noble metal oxide. The meaning of 100 parts by weight of the precursor of the noble metal oxide is as described above.

For example, a lower limit of the content of the mild reducing agent may be about 30 parts by weight, 35 parts by weight, 40 parts by weight, 45 parts by weight, 50 parts by weight, 60 parts by weight, 70 parts by weight, 80 parts by weight, 90 parts by weight, or 100 parts by weight, and an upper limit thereof may be about 300 parts by weight, 280 parts by weight, 260 parts by weight, 240 parts by weight, 220 parts by weight, 200 parts by weight, 180 parts by weight, 160 parts by weight, 140 parts by weight, 120 parts by weight, or 100 parts by weight.

The mild reducing agent may be, based on 100 parts by weight in total of the plurality of noble metal oxide seeds, greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

The type of the mold is not particularly limited as long as it may form a noble metal oxide aggregate. The term 'noble metal oxide aggregate' refers to a manufactured from a single pore of the mold, and it should be understood that since respective pores are spaced apart by a predetermined distance in the mold, the noble metal oxide aggregates manufactured in the respective pores are not aggregated to be integrated. The noble metal oxide aggregate may have a nanowire shape as will be described later.

Such a mold may be an anodic aluminum oxide membrane (AAO membrane), a cellulose membrane, a polycarbonate membrane, or a nylon membrane, each comprising a substrate and a plurality of pores penetrating the substrate in a thickness direction. For example, the nanowire shape refers to a shape in which the noble metal oxide particles are aggregated to be elongated in a length direction, such that an aspect ratio, which is a ratio of a length to a diameter, is very large. Therefore, being different from a form in which the noble metal oxide particles are aggregated to have a mesopore or a mesoporous structure in which a plurality of nanowires or nanorods are aggregated and integrated to have a mesopore, the mold does not include one capable of forming a mesoporous structure. For example, there is mesoporous silica, which is not included in the mold.

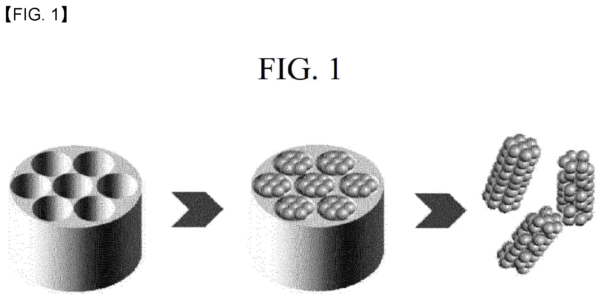

FIG. 1 is a schematic view illustrating a manufacturing process of the catalyst for an oxygen evolution reaction of a water electrolysis cell to be easily understood. As illustrated in FIG. 1, the mold may include a plurality of pores. In FIG. 1, only 7 pores are illustrated, but this is only for convenience of illustration to show that it includes a plurality of pores, and does not represent a lower limit and an upper limit of the number of the pores. The number of the pores may be adjusted as needed.

The diameter of the pore may be within a predetermined range. A size of a diameter of the nanowire may be adjusted according to the diameter of the pore. As a measuring method of the diameter of the pore, it was measured by photographing the mold using a scanning electron microscope (SEM).

A lower limit of the diameter of the pore may be about 10 nm, 20 nm, 30 nm, 40 nm, or 50 nm, and an upper limit of the diameter thereof may be about 200 nm, 180 nm, 160 nm, 140 nm, 120 nm, 100 nm, 80 nm, or 60 nm. The diameter of the pore may be greater than or equal to, or greater than any one of the lower limits described above; less than or equal to, or less than any one of the upper limits described above; or may have a range of greater than or equal to, or greater than any one of the lower limits described above, and less than or equal to, or less than any one of the upper limits described above. By adjusting the size of the pore to be within the above-described range, a plurality of noble metal oxide seeds may be stacked in a plurality of layers in the pore of the mold, and each of the layers may include a plurality of the noble metal oxide seeds, and thus a catalyst for an oxygen evolution reaction having improved performance and durability due to an increased surface area may be provided.

As described above, when the solution including the plurality of noble metal oxide seeds is introduced into the mold, the plurality of noble metal oxide seeds are stacked in a plurality of layers in the pores of the mold, and each of the layers may include a plurality of the noble metal oxide seeds.

As illustrated in FIG. 1, it may be confirmed that the plurality of noble metal oxide seeds introduced into the mold are stacked in a plurality of layers, and the layers each may include a plurality of the noble metal oxide seeds. Although the formation of a plurality of layers when introduced into the mold is not illustrated, according to the right side of FIG. 1, a total of eight layers are formed, and about seven noble metal oxide seeds may be present in one layer. However, FIG. 1 illustrates such a manufacturing process for easy understanding, and the number of layers is not necessarily limited to 8, nor are 7 noble metal oxide seeds necessarily present in a single layer.

By first forming a plurality of noble metal oxide seeds and stacking the plurality of noble metal oxide seeds to form a plurality of layers in the mold such that each layer includes a plurality of noble metal oxide seeds, a surface area of the manufactured noble metal oxide aggregate is increased due to the pores present between the noble metal oxide seeds, and accordingly, performance and durability of the catalyst may be improved.

After the introduction into the mold, a vacuum adsorption process may be further performed.

The vacuum adsorption process refers to a process of lowering air pressure to create a vacuum state to adsorb a material.

The vacuum adsorption may be performed by appropriately adjusting time and pressure as necessary. According to an embodiment, a processing time and a pressure of the vacuum adsorption may be within a predetermined range.

For example, a lower limit of the time may be about 10 minutes, 15 minutes, 20 minutes, 25 minutes, 30 minutes, 35 minutes, or 40 minutes, and an upper limit thereof may be about 100 minutes, 90 minutes, 80 minutes, 70 minutes, 60 minutes, 50 minutes, or 40 minutes. A lower limit of the pressure may be about 5 kPa, 6 kPa, 7 kPa, 8 kPa, 9 kPa, or 10 kPa, and an upper limit thereof may be about 20 kPa, 18 kPa, 16 kPa, 14 kPa, 12 kPa, or 10 kPa. The time and the pressure may respectively be greater than or equal to, or greater than any one of the described lower limits; less than or equal to, or less than any one of the described upper limits; or may have a range of greater than or equal to, or greater than any one of the described lower limits, and less than or equal to, or less than any one of the described upper limits.

The solution on which the vacuum adsorption process is performed may be subjected to a hydrothermal reaction. According to the hydrothermal reaction, a plurality of noble metal oxide particles may be aggregated through an interaction between the plurality of noble metal oxide seeds and between the mild reducing agents, and a bonding between the seeds may be strengthened.

The temperature and the time of the hydrothermal reaction are as described above.

By aggregating the plurality of noble metal oxide seeds according to the vacuum adsorption and the hydrothermal reaction, and performing a heat treatment on the aggregated plurality of noble metal oxide seeds, a noble metal oxide aggregate may be formed.

The noble metal oxide aggregate may be constituted by a plurality of noble metal oxide particles being aggregated. The noble metal oxide particle refers to a final product after performing the heat treatment process on the noble metal oxide seeds. In this case, the plurality of noble metal oxide particles are aggregated to an extent that pores may be present between the noble metal oxide particles, and accordingly, the noble metal oxide aggregate may have pores between the noble metal oxide particles.

The heat treatment may be performed at a temperature and for a time within a predetermined range.

For example, a lower limit of the temperature of the heat treatment may be about 350 °C, 360 °C, 370 °C, 380 °C, 390 °C, 400 °C, 410 °C, 420 °C, 430 °C, 440 °C, or 450 °C, and an upper limit thereof may be about 600 °C, 590 °C, 580 °C, 570 °C, 560 °C, 550 °C, 540 °C, 530 °C, 520 °C, 510 °C, 500 °C, 490 °C, 480 °C, 470 °C, 460 °C, or 450 °C.

In addition, a lower limit of the time of the heat treatment may be about 0.5 hours, 0.6 hours, 0.7 hours, 0.8 hours, 0.9 hours, 1 hour, 1.5 hours, or 2 hours, and an upper limit thereof may be about 4 hours, 3.8 hours, 3.6 hours, 3.4 hours, 3.2 hours, 3 hours, 2.9 hours, 2.8 hours, 2.7 hours, 2.6 hours, 2.5 hours, 2.4 hours, 2.3 hours, 2.2 hours, 2.1 hours, or 2 hours.

The temperature and the time of the heat treatment may each be greater than or equal to, or greater than any one of the lower limits described above; less than or equal to, or less than any one of the upper limits described above; or may have a range of greater than or equal to, or greater than any one of the lower limits described above, and less than or equal to, or less than any one of the upper limits described above.

After the heat treatment process, the mold may be removed.

The mold may be removed by a known method according to the type of the mold.

For example, the mold may be removed by an alkali solution or a heat treatment process. The alkali solution may be, for example, sodium hydroxide (NaOH).

The noble metal oxide aggregate formed according to the manufacturing process is illustrated on the rightmost side of FIG. 1.

The noble metal oxide aggregate formed according to the method may have a nanowire shape. The noble metal oxide aggregate formed according to the method may be provided in plurality. As illustrated in FIG. 1, on the rightmost side, a plurality of noble metal oxide aggregates manufactured according to the method may be present. Although only a portion of the finally manufactured noble metal oxide aggregates is illustrated on the rightmost side of FIG. 1, when manufacturing the noble metal oxide aggregate using the mold of FIG. 1, since a total of 7 pores are present, a total of 7 noble metal oxide aggregates may be formed.

Such a plurality of nanowire-shaped noble metal oxide aggregates may not be in an integrated form in which a plurality of nanowires or nanorods are aggregated, such as a mesoporous structure, but may exist in a state of being dispersed from each other. For example, a mold that may be used to manufacture a noble metal oxide aggregate having a mesoporous structure with a size in a range of 2 nm to 50 nm has a maximum pore size of about 20 nm, and generally about 12 nm. In this case, since the pore size of the mold is small, noble metal oxide seeds may not be introduced into the pores, and a precursor must be used. In addition, a physical external force such as high pressure is required to split a noble metal oxide aggregate having a mesoporous structure into a nanowire shape after the aggregate is manufactured using such a mold, but splitting the aggregate into a nanowire shape while maintaining its structure is virtually impossible except in that case of carbon. Therefore, although a noble metal oxide aggregate having a mesoporous structure may be manufactured using such a mold, a plurality of noble metal oxide aggregates having a nanowire shape may not be manufactured.

Accordingly, the plurality of noble metal oxide aggregates may be dispersed among supports or ion conductors to better form a three-phase interface. In addition, the noble metal oxide aggregate manufactured according to the method may improve performance by an increase in a reaction active lattice planes resulting from an uneven structure formed from aggregated individual noble metal oxide particles.

Since a plurality of noble metal oxide aggregates manufactured according to a method for manufacturing a catalyst for an oxygen evolution reaction of a water electrolysis cell according to an embodiment exist in individual forms, electrode manufacturing and coating may be easier than in the case of an integrated form in which a plurality of nanowire shapes are aggregated, such as a mesoporous structure.

As the noble metal oxide aggregate manufactured according to the method for manufacturing a catalyst for an oxygen evolution reaction of a water electrolysis cell according to an embodiment has a nanowire shape, a surface area may be

### 2. Membrane-electrode assembly for a water electrolysis cell

A membrane-electrode assembly for a water electrolysis cell according to another embodiment comprises a polymer electrolyte membrane; an oxygen evolution electrode positioned on one surface of the polymer electrolyte membrane and comprising a catalyst for an oxygen evolution reaction; and a hydrogen evolution electrode positioned on the other surface of the polymer electrolyte membrane.

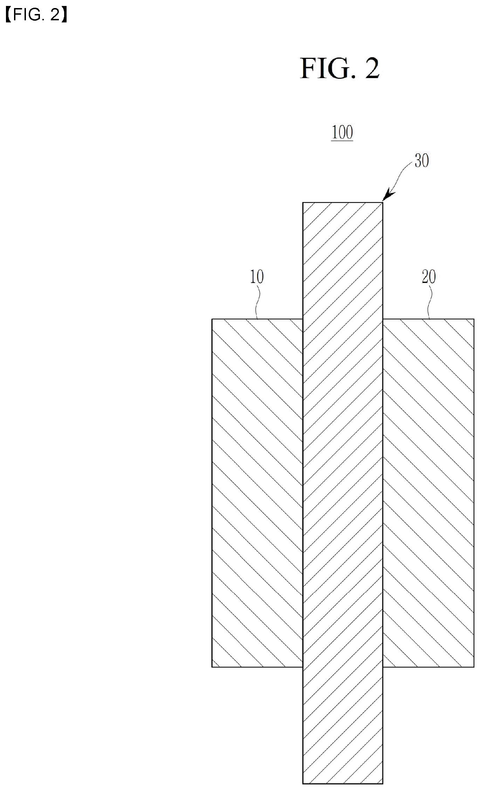

The membrane-electrode assembly for a water electrolysis cell is illustrated in FIG. 2. The membrane-electrode assembly (100) for a water electrolysis cell according to FIG. 2 comprises a polymer electrolyte membrane (30); an oxygen evolution electrode (10) positioned on one surface of the polymer electrolyte membrane; and a hydrogen evolution electrode (20) positioned on the other surface of the polymer electrolyte membrane.

Hereinafter, the oxygen evolution electrode, the hydrogen evolution electrode, and the polymer electrolyte membrane will be described in detail.

The oxygen evolution electrode refers to an electrode in which an oxygen evolution reaction (OER) occurs, and the hydrogen evolution electrode refers to an electrode in which a hydrogen evolution reaction (HER) occurs.

Hereinafter, the oxygen evolution electrode, the hydrogen evolution electrode, and the polymer electrolyte membrane will be sequentially described.

The catalyst for an oxygen evolution reaction included in the oxygen evolution electrode comprises a noble metal oxide aggregate in which a plurality of noble metal oxide particles comprising a noble metal oxide are agglomerated in a nanowire shape. For example, the nanowire shape refers to a shape in which noble metal oxide particles are agglomerated to be elongated in a length direction, such that an aspect ratio, which is a ratio of a length to a diameter, is very large. Therefore, the noble metal oxide aggregate is different from a form in which the noble metal oxide particles are aggregated to have a mesopores as described above, or an integrated mesoporous structure in which nanowires or nanorods are aggregated to have mesopores.

The catalyst for an oxygen evolution reaction may be manufactured according to the manufacturing method.

As described above, the surface area of the noble metal oxide aggregate may be increased due to pores between the plurality of noble metal oxide particles. For example, a BET specific surface area of the noble metal oxide aggregate may be within a predetermined range. The BET specific surface area is determined according to the method described in the "BET specific surface area measurement" of Evaluation Example 1 below.

For example, a lower limit of the BET specific surface area may be about 50 m²/g, 55 m²/g, 60 m²/g, 65 m²/g, 70 m²/g, 75 m²/g, 80 m²/g, 85 m²/g, 90 m²/g, 95 m²/g, 100 m²/g, 105 m²/g, 110 m²/g, 115 m²/g, 120 m²/g, or 125 m²/g, and an upper limit thereof is not particularly limited, but may be, for example, about 400 m²/g, 350 m²/g, 300 m²/g, 250 m²/g, 200 m²/g, 150 m²/g, or 100 m²/g.

The BET specific surface area may be greater than or equal to, or greater than any one of the described lower limits; or may be in a range that is greater than or equal to, or greater than any one of the described lower limits and less than or equal to, or less than any one of the described upper limits.

As the noble metal oxide aggregate has a BET specific surface area within the described range, performance and durability may be improved. The noble metal oxide particles may be stacked in a plurality of layers along a length direction of the noble metal oxide aggregate, and the layers may each include a plurality of the noble metal oxide particles.

As described above, since the noble metal oxide aggregate is stacked into a plurality of layers and includes a plurality of noble metal oxide particles in the layers, the aforementioned value of the BET specific surface area may be satisfied.

A diameter and a length of the noble metal oxide aggregate may be within a predetermined range. The diameter was measured by imaging the noble metal oxide aggregate using a scanning electron microscope (SEM) or a transmission electron microscope (TEM).

For example, a lower limit of the diameter of the noble metal oxide aggregate may be about 10 nm, 15 nm, 20 nm, 25 nm, 30 nm, 35 nm, 40 nm, 45 nm, or 50 nm, and an upper limit thereof may be about 200 nm, 150 nm, 100 nm, 90 nm, 80 nm, 70 nm, 60 nm, or 50 nm.

A lower limit of the length of the noble metal oxide aggregate may be about 150 nm, 200 nm, 250 nm, 300 nm, 350 nm, 400 nm, 450 nm, 500 nm, 550 nm, or 600 nm, and an upper limit thereof may be about 800 nm, 780 nm, 760 nm, 740 nm, 720 nm, 700 nm, 680 nm, 660 nm, 640 nm, 620 nm, or 600 nm.

The diameter and the length of the noble metal oxide aggregate may each be greater than or equal to, or greater than any one of the described lower limits; less than or equal to, or less than any one of the described upper limits; or have a range that is greater than or equal to, or greater than any one of the described lower limits and less than or equal to, or less than any one of the described upper limits.

The noble metal oxide may mean a final material formed from the precursor of the noble metal oxide described above.

The noble metal oxide may be iridium oxide, an oxide of an iridium alloy, or a combination thereof.

For example, the noble metal oxide may be IrOₓ (wherein x is an integer of 1 to 3), IrMOₓ (wherein M includes Ru, Pt, Sn, Se, Sb, Ta, Te, Nb, W, Zn, Au, or a combination thereof, and the x is an integer of 1 to 3), or a combination thereof.

By including the catalyst for an oxygen evolution reaction in the oxygen evolution electrode, performance and durability may be improved.

The oxygen evolution electrode may include the catalyst for an oxygen evolution reaction within a predetermined range based on a total weight of the oxygen evolution electrode.

For example, a lower limit of the content of the catalyst for an oxygen evolution reaction may be about 70 wt% or 72 wt%, and an upper limit thereof may be about 95 wt% or 90 wt%.

The content of the catalyst for an oxygen evolution reaction may be greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

The oxygen evolution electrode may further include an ion conductor to improve adhesion of the catalyst and for hydrogen ion transfer.

The ion conductor may include a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity.

In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound. Since this replacement method is widely known in the art, a detailed description thereof will be omitted in the present specification.

The content of the ion conductor may be appropriately adjusted as necessary, and in an example, a lower limit of the content of the ion conductor based on 100 parts by weight of the catalyst for an oxygen evolution reaction may be about 5 or 7 parts by weight, and an upper limit thereof may be about 30 parts by weight or 28 parts by weight.

Based on 100 parts by weight of the catalyst for an oxygen evolution reaction, the ion conductor may be greater than or equal to, or greater than any one of the described lower limits; may be less than or equal to, or less than any one of the described upper limits; or may be in a range of greater than or equal to, or greater than any one of the described lower limits and less than or equal to, or less than any one of the described upper limits. When the ion conductor is included within the above range, performance and durability are excellent.

The ion conductor may be used in the form of a single substance or a mixture, and may also be optionally used together with a non-conductive compound for the purpose of further improving adhesion to the polymer electrolyte membrane. The content of the non-conductive compound may be appropriately adjusted according to the purpose of use.

As the non-conductive compound, at least one selected from polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylenechlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

The hydrogen evolution electrode may include a catalyst for a hydrogen evolution reaction. The catalyst for a hydrogen evolution reaction may comprise active particles and a support.

The active particle may include a noble metal.

For example, the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer comprising a catalyst for an oxygen evolution reaction and a catalyst for a hydrogen evolution reaction, respectively, but may comprise an electrode substrate together with the catalyst layer.

In this case, the electrode substrate may perform a role of diffusing a fuel and an oxidant to the catalyst layer while playing a role of supporting the electrode.

The electrode substrate may include a microporous layer, a porous diffusion layer, or a combination thereof.

The microporous layer plays a role of enhancing a reactant diffusion effect, and may generally include conductive powder having a small particle diameter, for example, carbon powder, carbon black, acetylene black, activated carbon, metal oxide nanowires, carbon fibers, fullerene, carbon nanotubes, carbon nanowires, carbon nano-horns, or carbon nano rings.

The porous diffusion layer includes porous titanium (Porous Titnia), carbon paper, carbon cloth, carbon felt, or a metal cloth (referring to a porous film consisting of a metal cloth in a fibrous state or a cloth formed of polymer fibers and having a metal film formed on a surface thereof).

The microporous layer and the porous diffusion layer may include known ones in addition to those exemplified above.

The electrode substrate may use one subjected to a water-repellent treatment with a fluorine-based resin, and in this case, it may prevent reactant diffusion efficiency from being degraded by water generated when operating the water electrolysis cell.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The polymer electrolyte membrane has an ion exchange function of transferring hydrogen ions generated at the oxygen evolution electrode to the catalyst for a hydrogen evolution reaction.

A polymer electrolyte membrane according to an embodiment may include a porous support including a plurality of pores, and an ion conductor filling the pores of the porous support.

The porous support may be a fluorine-based support or a nano-web support.

The fluorine-based support may correspond to, for example, an expanded polytetrafluoroethylene (e-PTFE) having a microstructure of polymer fibrils, or a microstructure in which nodes are connected to each other by fibrils. Also, a film having a microstructure of polymer fibrils in which the nodes are not present may also be used as the porous support.

The nano-web support may be a support in which nanofibers are integrated in the form of a nonwoven fabric including a plurality of pores.

The ion conductor is as described above.

The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### 3. Water electrolysis cell

In an embodiment, a water electrolysis cell comprises the membrane-electrode assembly for a water electrolysis cell.

The water electrolysis cell is the same as a known one except for comprising the membrane-electrode assembly according to the present application, and thus a detailed description thereof will be omitted.

### [Mode for Invention]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

### Example 1.

(a) IrCl₄ from Sigma-Aldrich as a precursor of a noble metal oxide and oxalic acid from Sigma-Aldrich as a mild reducing agent in weights of 100 mg and 300 mg, respectively, were put into a reaction vessel together with 100 ml of water (H₂O), and then subjected to a hydrothermal reaction to prepare a solution in which a plurality of IrOₓ seeds were formed. At this time, the hydrothermal reaction was performed at a temperature of 80 °C for 1 hour. A diameter of the plurality of IrOₓ seeds was about 10 nm.
(b) 100 mg of the mild reducing agent was further added to the solution in which the plurality of IrOₓ seeds were formed, the solution was introduced into an anodic aluminum oxide (AAO) membrane including a substrate and a plurality of pores penetrating the substrate in a thickness direction, and a vacuum adsorption process was performed under a pressure of 10 kPa for 40 minutes, and then a hydrothermal reaction was performed to aggregate the plurality of IrOₓ seeds. At this time, a diameter of the pores was about 50 nm, and the hydrothermal reaction was also performed at a temperature of 80 °C for 1 hour.
(c) A heat treatment was finally performed on the aggregated plurality of IrOₓ seeds to strengthen bonding between the seeds, and the anodic aluminum oxide (AAO) membrane was removed to form an IrOₓ particle aggregate having a nanowire shape. At this time, the heat treatment was performed at a temperature of 450 °C for 2 hours.

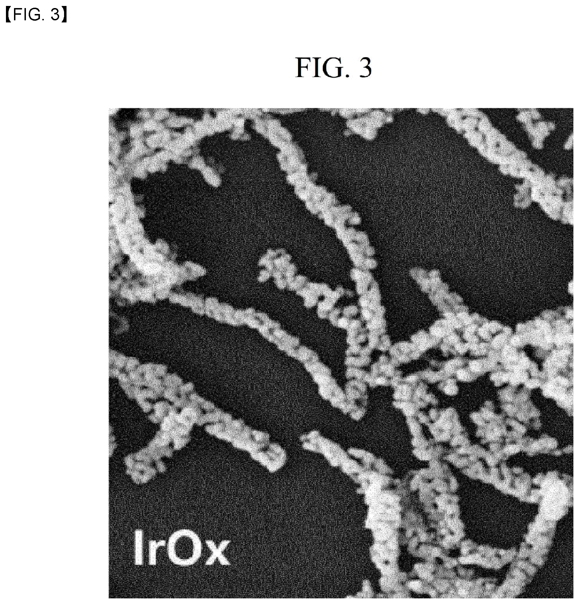

The IrOₓ particle aggregate has a nanowire shape as illustrated in the scanning electron microscope (SEM) photograph of FIG. 3, and as a result of photographing and measuring the IrOₓ particle aggregate using a scanning electron microscope (SEM), a diameter of the aggregate was about 50 nm, and a length of the aggregate was about 600 nm.

### Example 2.

An IrSnOₓ particle aggregate was manufactured in the same manner as in Example 1, except that in the above (a), 70 mg of IrCl₄ from Sigma-Aldrich and 30 mg of SnCl₄ from Sigma-Aldrich were added instead of adding 100 mg of IrCl₄ from Sigma-Aldrich as a noble metal oxide precursor.

A diameter of the plurality of IrSnOₓ seeds was about 10 nm.

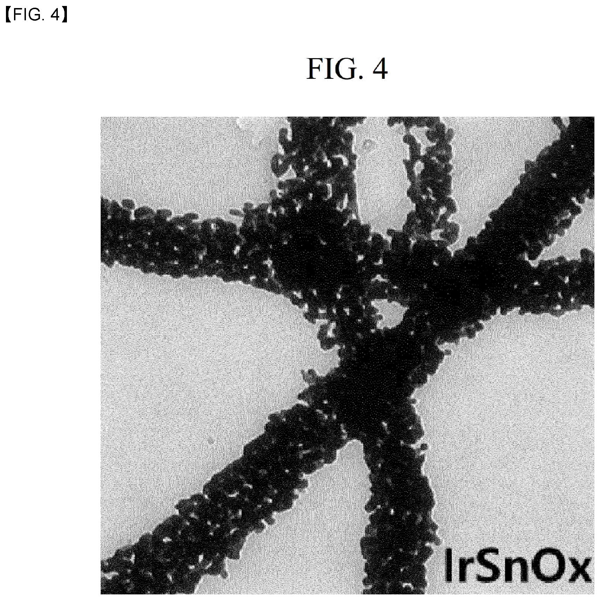

The IrSnOₓ particle aggregate has a nanowire shape as illustrated in the transmission electron microscope (TEM) photograph of FIG. 4, and as a result of photographing and measuring the IrSnOₓ particle aggregate using a transmission electron microscope (TEM), the diameter of the aggregate was about 50 nm, and the length of the aggregate was about 550 nm.

### Comparative Example.

Commercial IrOₓ (Alfa Aesar, 43396) was used.

### Evaluation Example 1. BET specific surface area measurement

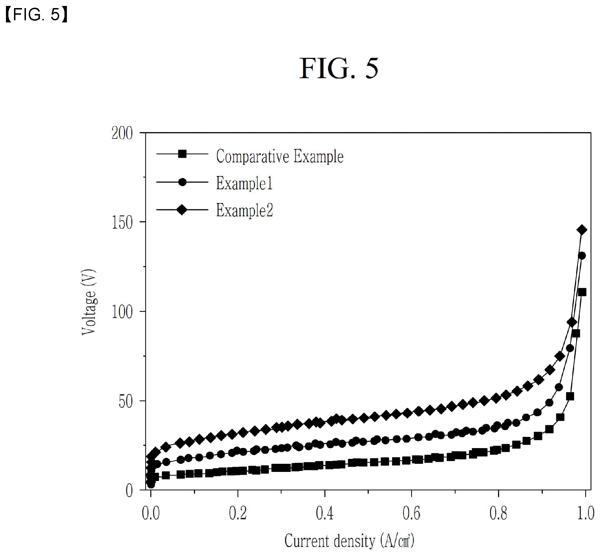

0.1 g of a sample of the catalyst for an oxygen evolution reaction of a water electrolysis cell manufactured in Examples 1 to 2 and Comparative Example was added to a tube, and after a degassing treatment at 150 °C for 4 hours, measurement was performed using ASAP2020 by Micromeritics. The same sample was measured 3 times, and the average value thereof was shown in Table 1 below. In addition, the measurement result of the BET specific surface area is as shown in FIG. 5.

**[Table 1]**

| | Example 1 | Example 2 | Comparative Example |
|---|---|---|---|
| BET specific surface area (m²/g) | 93 | 125 | 45 |

### Evaluation Example 2. I-V characteristics

An electrode slurry was manufactured by adding 20 parts by weight of an ion conductor dispersion and a solvent based on 100 parts by weight of the catalyst for an oxygen evolution reaction of a water electrolysis cell manufactured in Examples 1 to 2 and Comparative Example, and the electrode slurry was directly coated on a polymer electrolyte membrane (Chemours, NR212) and then dried at 90 °C for 30 minutes to manufacture a membrane-electrode assembly for a water electrolysis cell.

The manufactured membrane-electrode assembly for a water electrolysis cell was applied inside a unit cell designed and manufactured for a water electrolysis cell, and was measured by applying a protocol measuring voltage and resistance at a specific current from 1 mA to 20 A under conditions of a cell temperature of 80 °C, a water temperature of 80 °C, and a flow rate of 5 ml/min, and the measurement was stopped at 2 V.

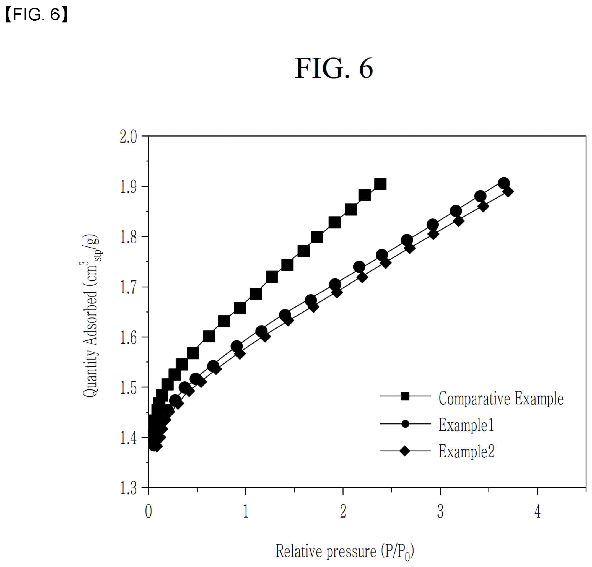

The result in this case is as shown in FIG. 6.

### Results

According to Table 1 and FIG. 5, it may be confirmed that the BET specific surface areas of the catalysts for an oxygen evolution reaction of Examples 1 and 2, which formed a noble metal oxide aggregate by forming a plurality of noble metal oxide seeds and agglomerating them, increased compared to the Comparative Example which did not.

According to Table 2 and FIG. 6, it may be confirmed that the membrane-electrode assemblies including the catalysts for an oxygen evolution reaction of Examples 1 and 2, which formed a noble metal oxide aggregate by forming a plurality of noble metal oxide seeds and agglomerating them, exhibited a high current density at the same voltage compared to the membrane-electrode assembly including the catalyst for an oxygen evolution reaction of the Comparative Example which did not, thereby improving performance.

Although the preferred embodiments have been described in detail above, the scope of rights is not limited thereto, and various modifications and improvements by those skilled in the art using the basic concept defined in the following claims also fall within the scope of rights.

### <Description of symbols>

100: membrane-electrode assembly for a water electrolysis cell
10: oxygen evolution electrode
20: hydrogen evolution electrode
30: polymer electrolyte membrane

## Claims

1. A method for manufacturing a catalyst for an oxygen evolution reaction of a water electrolysis cell, comprising:
hydrothermally reacting a precursor of a noble metal oxide to form a plurality of noble metal oxide seeds;
introducing a solution including the plurality of noble metal oxide seeds into a mold to agglomerate the plurality of noble metal oxide seeds; and
performing a heat treatment on the agglomerated plurality of noble metal oxide seeds to form a noble metal oxide aggregate.

2. The method for manufacturing a catalyst for an oxygen evolution reaction of a water electrolysis cell of claim 1, wherein
the precursor of the noble metal oxide includes iridium (Ir) chloride, iridium acetate, iridium aminate, iridium sulfide, or a combination thereof.

3. The method for manufacturing a catalyst for an oxygen evolution reaction of a water electrolysis cell of claim 2, wherein
the precursor of the noble metal oxide further includes a chloride, an acetate, an aminate, a sulfide, or a combination thereof of a noble metal including Ru, Pt, Sn, Se, Sb, Ta, Te, Nb, W, Zn, Au, or a combination thereof.

4. The method for manufacturing a catalyst for an oxygen evolution reaction of a water electrolysis cell of claim 1, wherein
the hydrothermal reaction is performed at a temperature within a range of 60 °C to 120 °C for 0.5 hours to 3 hours.

5. The method for manufacturing a catalyst for an oxygen evolution reaction of a water electrolysis cell of claim 1, wherein
a diameter of the noble metal oxide seeds is within a range of 2 nm to 50 nm.

6. The method for manufacturing a catalyst for an oxygen evolution reaction of a water electrolysis cell of claim 1, wherein
the mold is an anodic aluminum oxide (AAO) membrane, a cellulose membrane, a polycarbonate membrane, or a nylon membrane including a substrate and a plurality of pores penetrating the substrate in a thickness direction.

7. The method for manufacturing a catalyst for an oxygen evolution reaction of a water electrolysis cell of claim 6, wherein
a diameter of the pores of the mold is within a range of 10 nm to 200 nm.

8. The method for manufacturing a catalyst for an oxygen evolution reaction of a water electrolysis cell of claim 6, wherein
the plurality of noble metal oxide seeds are stacked in a plurality of layers in the pores of the mold, and the layers each comprise a plurality of the noble metal oxide seeds.

9. The method for manufacturing a catalyst for an oxygen evolution reaction of a water electrolysis cell of claim 1, further comprising:
performing a vacuum adsorption process after the introducing into the mold,
wherein the vacuum adsorption process is performed under a pressure within a range of 5 kPa to 20 kPa for 10 minutes to 100 minutes.

10. The method for manufacturing a catalyst for an oxygen evolution reaction of a water electrolysis cell of claim 1, wherein
the heat treatment is performed at a temperature within a range of 350 °C to 600 °C for 0.5 hours to 4 hours.

11. The method for manufacturing a catalyst for an oxygen evolution reaction of a water electrolysis cell of claim 1, wherein
the noble metal oxide aggregate is in a nanowire shape.

12. A membrane-electrode assembly for a water electrolysis cell, comprising:
a polymer electrolyte membrane;
an oxygen evolution electrode positioned on one surface of the polymer electrolyte membrane and including a catalyst for an oxygen evolution reaction; and
a hydrogen evolution electrode positioned on the other surface of the polymer electrolyte membrane,
wherein the catalyst for an oxygen evolution reaction includes a noble metal oxide aggregate in which a plurality of noble metal oxide particles including a noble metal oxide are agglomerated in a nanowire shape.

13. The membrane-electrode assembly for a water electrolysis cell of claim 12, wherein
the noble metal oxide aggregate has a BET specific surface area greater than or equal to 50 m²/g.

14. The membrane-electrode assembly for a water electrolysis cell of claim 12, wherein
the noble metal oxide particles are stacked in a plurality of layers along a length direction of the noble metal oxide aggregate, and the layers each include a plurality of the noble metal oxide particles.

15. The membrane-electrode assembly for a water electrolysis cell of claim 12, wherein
a diameter of the noble metal oxide aggregate is within a range of 10 nm to 200 nm, and
a length of the noble metal oxide aggregate is within a range of 150 nm to 800 nm.

16. The membrane-electrode assembly for a water electrolysis cell of claim 12, wherein
the noble metal oxide is IrOₓ (wherein x is an integer of 1 to 3), IrMOₓ (wherein M includes Ru, Pt, Sn, Se, Sb, Ta, Te, Nb, W, Zn, Au, or a combination thereof, and the x is an integer of 1 to 3), or a combination thereof.

17. The membrane-electrode assembly for a water electrolysis cell of claim 12, wherein
the oxygen evolution electrode further comprises an ion conductor, and
the oxygen evolution electrode comprises the catalyst for an oxygen evolution reaction within a range of 70 wt% to 95 wt% based on a total weight of the oxygen evolution electrode.

18. The membrane-electrode assembly for a water electrolysis cell of claim 12, wherein
the hydrogen evolution electrode comprises
a catalyst for hydrogen evolution comprising a carbon-based support, and active particles supported on the carbon-based support and comprising a noble metal.

19. The membrane-electrode assembly for a water electrolysis cell of claim 12, wherein
the polymer electrolyte membrane comprises a porous support comprising a plurality of pores, and an ion conductor filling the pores of the porous support.

20. A water electrolysis cell comprising the membrane-electrode assembly according to claim 12.
